# EUROPÄISCHE PATENTANMELDUNG

(11) **EP 4 528 311 A1**
(43) Veröffentlichungstag der Anmeldung: **26.03.2025**
(21) Anmeldenummer: 23199399.9
(22) Anmeldetag: 25.09.2023
(51) Int. Cl.: G01S 5/02

(54) **VERFAHREN ZUR ÜBERWACHUNG EINES BETRIEBS EINES FUNKORTUNGSSYSTEMS UND FUNKORTUNGSSYSTEM**

(71) Anmelder: Siemens Aktiengesellschaft, 80333 München (DE)
(72) Erfinder: Leister, Norbert, 08056 Zwickau (DE); Münster, Timo, 81245 München (DE); Schultheis, Michael, 08056 Zwickau (DE)
(74) Vertreter: Siemens Patent Attorneys

(57) **Zusammenfassung**

Die Erfindung betrifft ein Funkortungssystem, dessen die Basisstationen (G1-G5, G5`) jeweils benachbarte bzw. in einer vorgegebenen Umgebung befindliche Basisstationen als Nachbar-Basisstationen ermitteln. Zusätzlich ermitteln die Basisstationen jeweils Abstände zu den jeweiligen Nachbar-Basisstationen. Die jeweils ermittelten Nachbar-Basisstationen werden mit einer jeweiligen Soll-Nachbarn-Vorgabe verglichen. Außerdem werden die jeweils ermittelten Abstände mit einer jeweiligen Soll-Abstand-Vorgabe verglichen. Es wird jeweils ein Fehler signalisiert, wenn weniger als ein vorgegebener Anteil der jeweils ermittelten Nachbar-Basisstationen der jeweiligen Soll-Nachbarn-Vorgabe entspricht und/oder wenn die jeweils ermittelten Abstände von der jeweiligen Soll-Abstand-Vorgabe um mehr als ein vorgegebenes Maß abweichen.

## Beschreibung

Die vorliegende Erfindung betrifft ein Verfahren zur Überwachung eines Betriebs eines Funkortungssystems, insbesondere eines Real-time Locating System (RTLS), und ein zur Durchführung des Verfahrens geeignetes Funkortungssystem.

Funkbasierte Ortungsvorrichtungen können beispielsweise auf BLE- (Bluetooth Low Energy), UWB- (Ultra-wideband) oder RFID-Tags (radio-frequency identification) basieren, die zur Identifizierung oder Ortung von Gegenständen an diesen jeweils angebracht werden. Funkortungssysteme für industrielle Automatisierungssysteme müssen besonderen Anforderungen hinsichtlich zuverlässiger Datenübermittlung, Authentizität übermittelter Daten und Unempfindlichkeit gegenüber Störquellen genügen. Da industrielle Automatisierungssysteme zur Überwachung, Steuerung und Regelung von technischen Prozessen dienen, insbesondere im Bereich Fertigungs-, Prozess- und Gebäudeautomatisierung, können gestörte, manipulierte oder fehlerhaft konfigurierte Funkortungssysteme zu schwerwiegenden Auswirkungen führen, im ungünstigsten Fall zu einem Stillstand eines Automatisierungssystems.

Aus DE 10 2009 008174 A1 ist ein Verfahren zur Ermittlung von Entfernung, Geschwindigkeit und Bewegungsrichtung eines RFID-Transponders bekannt, bei dem der RFID-Transponder auf übliche Weise mittels eines RFID-Lesegeräts abgefragt wird. Hierzu sendet das RFID-Lesegerät ein phasenweise moduliertes Versorgungsträgersignal aus. Ein Radarmodul sendet gleichzeitig ein Radarsignal aus, das vom RFID-Transponder empfangen und reflektiert wird. Das Versorgungsträgersignal und das Radarsignal weisen unterschiedliche Frequenzen auf. Das reflektierte Radarsignal wird wiederum vom Radarmodul empfangen. Aus dem reflektierten empfangenen Radarsignal wird eine Position des RFID-Transponders ermittelt. Das Radarsignal wird insbesondere dann ausgesendet, wenn auf das Versorgungsträgersignal keine Abfragedaten aufmoduliert werden.

In EP 3 290 948 B1 ist ein Positionserfassungssensor eines Positionserfassungssystems beschrieben, der einen ersten und einen zweiten Funk-Transponder umfasst, die jeweils eine mit einer Antenne verbundene Sende- und Empfangseinheit und eine Speichereinheit zur persistenten Datenspeicherung aufweisen. Der erste Funk-Transponder weist eine Energieversorgungsquelle auf und ist wahlweise in einen Ruhezustand mit reduziertem Energieverbrauch und in einen aktiven Betriebszustand mit vollständigem Funktionsumfang versetzbar. Im aktiven Betriebszustand erfolgt ein Aufbau zumindest einer Funk-Verbindung zur Positionserfassung zu zumindest einem ersten Funk-Transponder-Lesegerät. Der induktiv durch ein Funk-Transponder-Lesegerät mit Energie versorgbare zweite Funk-Transponder ist dazu ausgestaltet und eingerichtet, bei Eintritt in einen Erfassungsbereich eines zweiten Funk-Transponder-Lesegerätes den ersten Funk-Transponder aus dem Ruhezustand in den aktiven Betriebszustand zu versetzen oder über das zweite Funk-Transponder-Lesegerät eine dem zweiten Funk-Transponder zugeordnete Positionsinformation an einen Server des Positionserfassungssystems zu übermitteln.

EP 3 916 419 A1 betrifft ein Funkortungssystem, bei dem eine Position eines Transponders mittels mehrerer Basisstationen bzw. weiterer Transponder anhand von Funksignallaufzeiten erfasst wird. Dabei sind die Basisstationen jeweils an einer vorgegebenen Position angeordnet. Zumindest ausgewählte Basisstationen umfassen jeweils eine Sensoreinrichtung, die an der vorgegebenen Position der jeweiligen Basisstation zumindest einen für die vorgegebene Position charakteristischen optischen, elektro-magnetischen, induktiven bzw. kapazitiven Referenz-Messwert erfasst. Die Sensoreinrichtungen ermitteln während des Betriebs des Funkortungssystems jeweils zyklisch bzw. fortlaufend aktuelle Messwerte und vergleichen diese mit dem jeweiligen Referenz-Messwert. Die Basisstationen bzw. eine mit den Basisstationen verbundene Überwachungseinrichtung signalisieren jeweils bei einer Abweichung des aktuellen Messwerts vom jeweiligen Referenz-Messwert eine Warnung.

Bei einer Installation von Basisstationen, insbesondere RTLS-Gateways, für Funkortungssystems ist es wesentlich, dass die Basisstationen nach ihrer Positionierung bzw. Inbetriebnahme nicht mehr versetzt werden. Bei nachträglich geänderten Positionen der Basisstationen werden Positionen zu ortender Objekte nicht mehr richtig berechnet, wodurch schwerwiegende Folgen entstehen können. Um dies zu vermeiden, wird üblicherweise regelmäßig eine aktualisierte Vermessung der Positionen der Basisstationen vorgenommen. Derartige Überprüfungen verursachen neben temporären betrieblichen Störungen erhebliche Kosten.

Der vorliegenden Erfindung liegt daher die Aufgabe zugrunde, ein Verfahren zur Überwachung eines Betriebs eines Funkortungssystems zu schaffen, das auf einer zuverlässigen und genauen Positionierung von Basisstationen des Funkortungssystems basiert, sowie zur Durchführung des Verfahrens geeignete Mittel bzw. Realisierungen anzugeben.

Diese Aufgabe wird erfindungsgemäß durch ein Verfahren mit den in Anspruch 1 angegebenen Merkmalen und durch ein Funkortungssystem mit den in Anspruch 14 angegebenen Merkmalen gelöst. Vorteilhafte Weiterbildungen der vorliegenden Erfindung sind in den abhängigen Ansprüchen angegeben.

Entsprechend dem erfindungsgemäßen Verfahren zur Überwachung eines Betriebs eines Funkortungssystems wird eine Position eines Transponders mittels mehrerer Basisstationen des Funkortungssystems anhand von Funksignal-Empfangszeitdifferenzen bzw. anhand von Funksignal-Laufzeiten ermittelt. Dabei sind die Basisstationen jeweils an einer vorgegebenen Position angeordnet. Das Funkortungssystem ist vorzugsweise ein zumindest UWB-, CHIRP-, PHASE- bzw. RFID-basiertes Real-time Locating System.

Die Basisstationen ermitteln erfindungsgemäß jeweils benachbarte bzw. in einer vorgegebenen Umgebung befindliche Basisstationen als Nachbar-Basisstationen. Zusätzlich ermitteln die Basisstationen jeweils Abstände zu den jeweiligen Nachbar-Basisstationen. Die Nachbar-Basisstationen und die Abstände werden vorzugsweise zyklisch ermittelt. Die Abstände zu den Nachbar-Basisstationen können beispielsweise anhand von Funksignal-Laufzeiten zu bzw. von den Nachbar-Basisstationen ermittelt werden.

Die jeweils ermittelten Nachbar-Basisstationen werden erfindungsgemäß mit einer jeweiligen Soll-Nachbarn-Vorgabe verglichen. Außerdem werden die jeweils ermittelten Abstände mit einer jeweiligen Soll-Abstand-Vorgabe verglichen. Dabei können die jeweils ermittelten Abstände mit der jeweiligen Soll-Abstand-Vorgabe sowohl absolut als auch relativ verglichen werden.

Die Soll-Nachbarn-Vorgaben und die Soll-Abstand-Vorgaben können beispielsweise aus einer Projektierung des Funkortungssystems bzw. der jeweiligen Basisstation abgeleitet werden. Insbesondere können die Soll-Nachbarn-Vorgaben und die Soll-Abstand-Vorgaben bei einer Inbetriebnahme des Funkortungssystems bzw. der jeweiligen Basisstation ermittelt bzw. festgelegt werden.

Erfindungsgemäß wird jeweils ein Fehler signalisiert, wenn weniger als ein vorgegebener Anteil der jeweils ermittelten Nachbar-Basisstationen der jeweiligen Soll-Nachbarn-Vorgabe entspricht bzw. wenn die jeweils ermittelten Abstände von der jeweiligen Soll-Abstand-Vorgabe um mehr als ein vorgegebenes Maß abweichen. Vorzugsweise wird der jeweilige Anteil der den Soll-Nachbarn-Vorgaben entsprechenden Nachbar-Basisstationen als Mittelwert über eine vorgegebene Anzahl von Nachbar-Ermittlungen gebildet. Dementsprechend wird der jeweilige Abstand vorteilhafterweise als Mittelwert über eine vorgegebene Anzahl von Abstand-Ermittlungen gebildet.

Insbesondere wird der Fehler jeweils signalisiert, wenn weniger als ein erster vorgegebener Anteil der jeweils ermittelten Nachbar-Basisstationen der jeweiligen Soll-Nachbarn-Vorgabe entspricht bzw. wenn die jeweils ermittelten Abstände von der jeweiligen Soll-Abstand-Vorgabe um mehr als ein erstes vorgegebenes Maß abweichen. Dagegen kann jeweils eine Warnung signalisiert werden, wenn weniger als ein zweiter vorgegebener Anteil der jeweils ermittelten Nachbar-Basisstationen der jeweiligen Soll-Nachbarn-Vorgabe entspricht bzw. wenn die jeweils ermittelten Abstände von der jeweiligen Soll-Abstand-Vorgabe um mehr als ein zweites vorgegebenes Maß abweichen.

Insgesamt ermöglicht das erfindungsgemäße Verfahren eine automatisierte Erkennung von Fehlkonfigurationen bzw. Fehlanordnungen von Basisstationen innerhalb eine Funkortungssystems. Auf dieser Grundlage können Benutzer des Funkortungssystems zuverlässig und schnell gewarnt werden, dass ermittelte Positionsdaten möglicherweise signifikant von tatsächlichen Werten abweichen. Insbesondere kann auf einen signalisierten Fehler bzw. eine signalisierte Warnung automatisch ein Auftrag zur Korrektur einer Anordnung bzw. erfassten Position einer jeweils betroffenen Basisstation erzeugt werden. Ein solcher Auftrag kann beispielsweise mittels einer Meldung an Betriebsführungs- bzw. Wartungspersonal für das Funkortungssystem übermittelt werden.

Die Fehler bzw. die Warnungen werden vorzugsweise durch die Basisstationen bzw. durch eine mit den Basisstationen verbundene Steuerungseinrichtung signalisiert. Zusätzlich zu oben genannten vorgegebenen Anteilen und Maßen können weitere Warnschwellen für jeweils weitere vorgegebene Anteile der jeweils ermittelten, den Soll-Nachbarn-Vorgaben entsprechenden Nachbar-Basisstationen bzw. für jeweils weitere Abweichungen von den Soll-Abstand-Vorgaben definiert werden. Bei Erreichen dieser weiteren Warnschwellen kann damit jeweils eine entsprechende Warnung signalisiert werden. Auf diese Weise können Benutzer des Funkortungssystems je nach zu erwartenden Auswirkungen gestaffelt gewarnt werden.

Entsprechend einer besonders bevorzugten Ausgestaltung der vorliegenden Erfindung werden bei einer Ermittlung der Nachbar-Basisstationen und der Abstände nur Basisstationen berücksichtigt, deren Position in einem Projektierungssystem als seit einer vorgegebenen Zeitdauer unverändert erfasst ist. Dementsprechend werden Fehler bzw. Warnungen nur in Bezug auf berücksichtigte Basisstationen signalisiert. Auf diese Weise kann Stabilität gegenüber eher kurzfristigen Umbaumaßnahmen oder laufenden Konfigurationsänderungen erzielt werden.

Das erfindungsgemäße Funkortungssystem zur Durchführung eines Verfahrens entsprechend vorangehenden Ausführungen vorgesehen und umfasst mehrere jeweils an einer vorgegebenen Position angeordnete Basisstationen zur Ermittlung einer Position zumindest eines Transponders. Die Basisstationen sind dafür eingerichtet, jeweils benachbarte bzw. in einer vorgegebenen Umgebung befindliche Basisstationen als Nachbar-Basisstationen zu ermitteln und jeweils Abstände zu den jeweiligen Nachbar-Basisstationen zu ermitteln.

Darüber hinaus ist das Funkortungssystem erfindungsgemäß dafür eingerichtet, die jeweils ermittelten Nachbar-Basisstationen mit einer jeweiligen Soll-Nachbarn-Vorgabe zu vergleichen und die jeweils ermittelten Abstände mit einer jeweiligen Soll-Abstand-Vorgabe zu vergleichen. Zusätzlich ist das Funkortungssystem dafür eingerichtet, jeweils einen Fehler zu signalisieren, wenn weniger als ein vorgegebener Anteil der jeweils ermittelten Nachbar-Basisstationen der jeweiligen Soll-Nachbarn-Vorgabe entspricht bzw. wenn die jeweils ermittelten Abstände von der jeweiligen Soll-Abstand-Vorgabe um mehr als ein vorgegebenes Maß abweichen.

Die vorliegende Erfindung wird nachfolgend an einem Ausführungsbeispiel anhand der Zeichnung näher erläutert. Es zeigt
- Figur 1: Funkortungssystem mit mehreren Basisstationen für ein industrielles Automatisierungssystem,
- Figur 2: fünf Basisstationen eines Funkortungssystems in einer Soll-Anordnung,
- Figur 3: die Basisstationen gemäß Figur 2 mit einer fehlerhaften Anordnung einer Basisstation,
- Figur 4: neun Basisstationen eines Funkortungssystems in einer Soll-Anordnung,
- Figur 5: die Basisstationen gemäß Figur 4 mit einer vertauschten Anordnung von zwei Basisstationen.

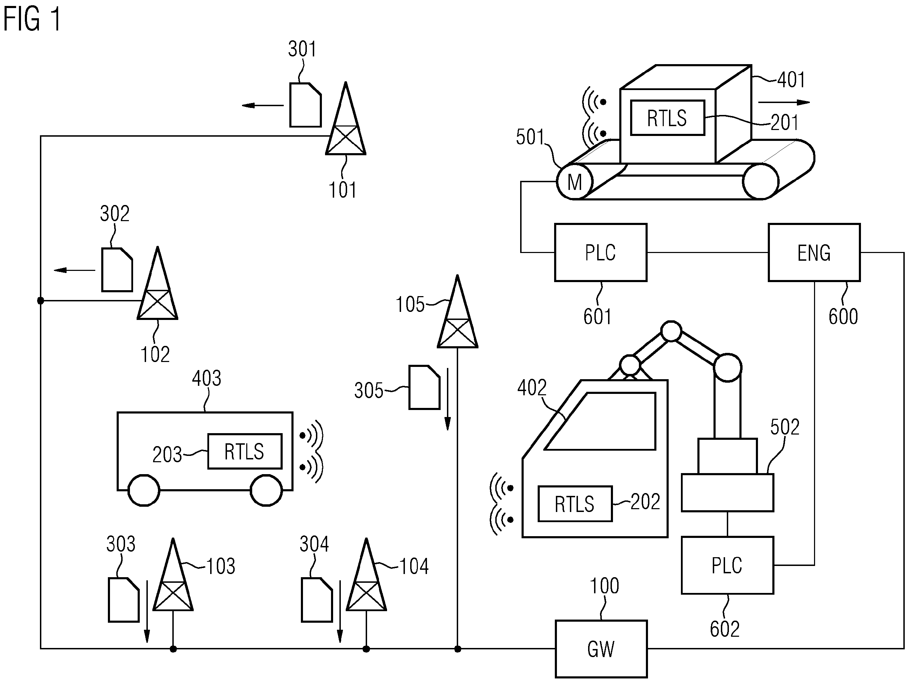

Das in Figur 1 dargestellte Funkortungssystem ist im vorliegenden Ausführungsbeispiel ein UWB-, CHIRP-, PHASE- bzw. RFID-basiertes Real-time Locating System (RTLS), das mehrere Basisstationen 101-105 umfasst. Durch die Basisstationen 101-105 werden anhand von Funksignal-Empfangszeitdifferenzen bzw. anhand von Funksignal-Laufzeiten Positionen von RTLS-Transpondern 201-203 erfasst, die an zu ortenden Gegenständen angebracht sind. Zur Ortung eines RTLS-Transponders können neben den Basisstationen auch jeweils andere Transponder verwendet werden. Die Basisstationen 101-105 sind jeweils an einer vorgegebenen Position angeordnet.

Mittels eines ersten RTLS-Transponders 201 wird beispielsweise ein Stückgut 401 auf einem Transportband überwacht, dessen Antrieb 501 durch eine erste speicherprogrammierbare Steuerung 601 gesteuert wird. Ein zweiter RTLS-Transponder 202 ist im vorliegenden Ausführungsbeispiel an einem Fahrzeugteil 402 befestigt, das in einer Fahrzeugfertigungslinie durch einen Roboter 502 transportiert und montiert wird. Der Roboter wird durch eine zweite speicherprogrammierbare Steuerung 602 gesteuert, die ebenso wie die erste speicherprogrammierbare Steuerung 601 mit einem Engineering-System 600 verbunden ist. Durch das Engineering-System 600 werden u.a. die speicherprogrammierbaren Steuerungen 601, 602 und das Funkortungssystem projektiert bzw. überwacht.

Das Funkortungssystem dient im vorliegenden Ausführungsbeispiel außerdem zur Überwachung der Position eines autonomen Fahrzeugs 403, mit denen Produktionsgüter zur Fahrzeugfertigungslinie transportiert werden. An dem autonomen Fahrzeug 403 ist zur Ortung ein dritter RTLS-Transponder 203 angeordnet. Neben UWB-, CHIRP-, PHASE- bzw. RFID-Komponenten kann das Funkortungssystem beispielsweise zusätzliche Komponenten zur GPS-, WLAN- oder Inertialsensorik-basierten Ortung umfassen. Dabei können mehrere oder alle dieser Komponenten in die RTLS-Transponder 201-203 und Basisstationen 101-105 des Funkortungssystems integriert sein.

Die Basisstationen 101-105 sind mit einer als Gateway 100 ausgestalteten Auswertevorrichtung des Funkortungssystems verbunden. Die RTLS-Transponder 201-203 übermitteln vorzugsweise jeweils einen dem jeweils zu ortenden Gegenstand zugeordneten Objektidentifikator an die Basisstationen 101-105. Auf dieser Basis senden die Basisstationen 101-105 Datagramme 301-305, die erfasste Signalempfangszeit- bzw. Signallaufzeitinformationen und Objektidentifikatoren umfassen, zur Auswertung an das Gateway 100. Das Gateway 100 des Funkortungssystems übermittelt wiederum die erfassten Positionen der RTLS-Transponder 201-203 einschließlich der Objektidentifikatoren an das Engineering-System 600. Dementsprechend ist das Engineering-System 600 dafür konfiguriert, anhand der übermittelten Positionen der RTLS-Transponder 201-203 einschließlich der Objektidentifikatoren den RTLS-Transpondern 201-203 im Engineering-System 600 jeweils zugeordnete Ortsinformationen zu validieren.

Die Basisstationen 101-105 ermitteln jeweils benachbarte bzw. in einer vorgegebenen Umgebung befindliche Basisstationen als Nachbar-Basisstationen sowie Abstände zu den jeweiligen Nachbar-Basisstationen. Im vorliegenden Ausführungsbeispiel werden die Nachbar-Basisstationen und die Abstände zyklisch ermittelt. Die Abstände zu den Nachbar-Basisstationen werden insbesondere anhand von Funksignal-Laufzeiten zu bzw. von den Nachbar-Basisstationen ermittelt.

Die jeweils ermittelten Nachbar-Basisstationen werden mit einer jeweiligen Soll-Nachbarn-Vorgabe verglichen. Zusätzlich werden die jeweils ermittelten Abstände mit einer jeweiligen Soll-Abstand-Vorgabe verglichen. Die jeweils ermittelten Abstände können mit der jeweiligen Soll-Abstand-Vorgabe sowohl absolut als auch relativ verglichen werden.

Vorzugsweise werden die Soll-Nachbarn-Vorgaben und die Soll-Abstand-Vorgaben aus einer Projektierung des Funkortungssystems bzw. der jeweiligen Basisstation 101-105 abgeleitet. Diese Projektierung kann beispielsweise im Engineering-System 600 gespeichert sein. Insbesondere können die Soll-Nachbarn-Vorgaben und die Soll-Abstand-Vorgaben bei einer Inbetriebnahme des Funkortungssystems bzw. der jeweiligen Basisstation ermittelt bzw. festgelegt werden.

Wenn weniger als ein vorgegebener Anteil der jeweils ermittelten Nachbar-Basisstationen der jeweiligen Soll-Nachbarn-Vorgabe entspricht bzw. wenn die jeweils ermittelten Abstände von der jeweiligen Soll-Abstand-Vorgabe um mehr als ein vorgegebenes Maß abweichen, wird jeweils ein Fehler signalisiert. Vorzugsweise wird der jeweilige Anteil der den Soll-Nachbarn-Vorgaben entsprechenden Nachbar-Basisstationen als Mittelwert über eine vorgegebene Anzahl von Nachbar-Ermittlungen gebildet. Dementsprechend wird der jeweilige Abstand als Mittelwert über eine vorgegebene Anzahl von Abstand-Ermittlungen gebildet.

Im vorliegenden Ausführungsbeispiel werden bei einer Ermittlung der Nachbar-Basisstationen und der Abstände nur Basisstationen berücksichtigt, deren Position in einem Projektierungssystem, insbesondere im Engineering-Systems 600, als seit einer vorgegebenen Zeitdauer unverändert erfasst ist. Daher werden Fehler nur in Bezug auf berücksichtigte Basisstationen signalisiert.

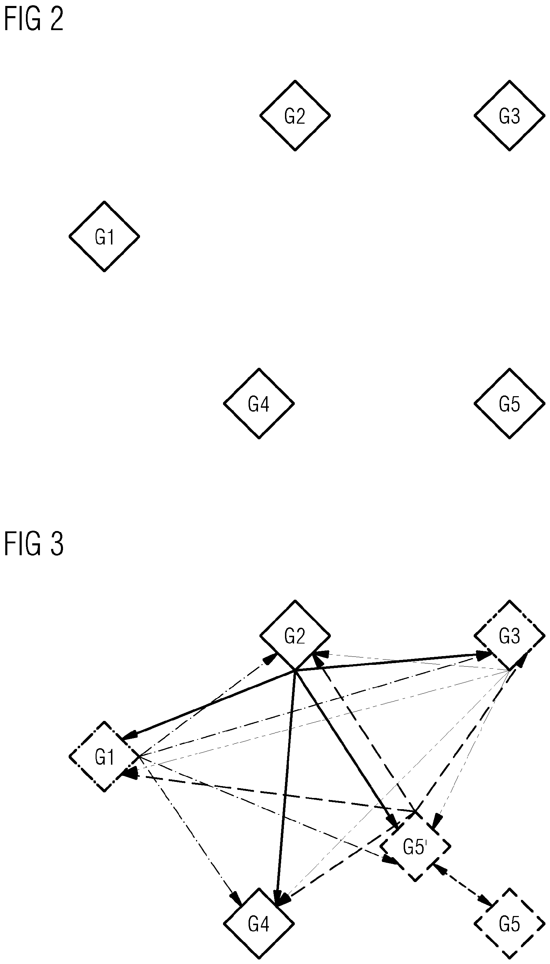

Oben beschriebene automatische Erkennung einer Verschiebung bzw. Fehlplatzierung von Basisstationen wird nachfolgend an den in Figur 2 bis 5 dargestellten Anordnungen erläutert. Bei der in Figur 2 dargestellten Soll-Anordnung mit fünf Basisstationen G1-G5 sind die Basisstationen G2-G5 im Wesentlichen in einem Quadrat angeordnet, während die Basisstation G1 links davon, in etwa auf halber Höhe platziert ist. Im Vergleich zur Soll-Anordnung gemäß Figur 2 ist die Basisstation G5` in Richtung ihrer Nachbar-Basisstationen G2-G4 verschoben. Demzufolge sind die Abstände der Basisstation G5` zu den Nachbar-Basisstationen G2-G4 verkürzt, so dass diese nicht mehr den Soll-Abstand-Vorgaben entsprechen. Im vorliegenden Anwendungsbeispiel wird deswegen ein Fehler signalisiert.

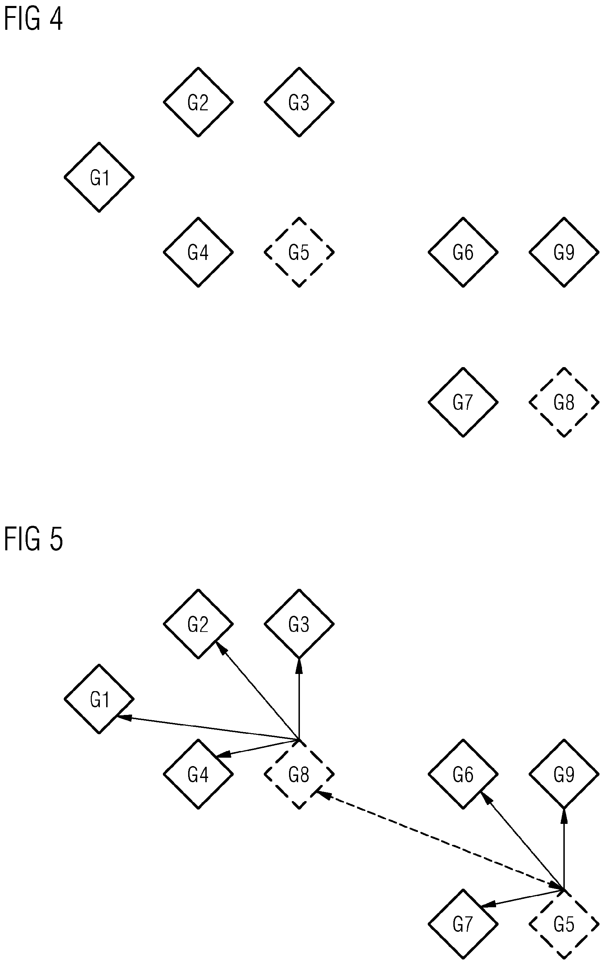

Die in Figur 4 dargestellte Soll-Anordnung umfasst neun Basisstationen in zwei Gruppen. Eine erste Gruppe umfasst die fünf Basisstationen G1-G5 entsprechend Figur 2. Unterhalb davon und nach rechts versetzt ist eine zweite Gruppe mit vier Basisstationen G6-G9 vorgesehen, die im Wesentlichen in einem Quadrat angeordnet sind. Im Vergleich zur Soll-Anordnung gemäß Figur 4 sind die Basisstationen G5 und G9 miteinander vertauscht. Die Basisstation G5 weist somit nicht mehr die Basisstationen G1-G4 aus der ersten Gruppe als Nachbar-Basisstationen auf, sondern die Basisstationen G6-G8 aus der zweiten Gruppe. Somit gibt es keine Übereinstimmungen mehr mit der Soll-Nachbarn-Vorgabe für Basisstation G5. Analog dazu weist die Basisstation G9 somit nicht mehr die Basisstationen G6-G8 aus der zweiten Gruppe als Nachbar-Basisstationen auf, sondern die Basisstationen G1-G4 aus der ersten Gruppe.

Also gibt es auch keine Übereinstimmungen mehr mit der Soll-Nachbarn-Vorgabe für Basisstation G9. Daher wird auch in diesem Anwendungsbeispiel ein Fehler signalisiert.

Vorzugsweise werden Fehler und Warnungen gestaffelt signalisiert, je nach dem welcher Anteil der jeweils ermittelten Nachbar-Basisstationen der jeweiligen Soll-Nachbarn-Vorgabe entspricht bzw. wie stark die jeweils ermittelten Abstände von der jeweiligen Soll-Abstand-Vorgabe abweichen. Beispielsweise werden Fehler jeweils signalisiert, wenn weniger als ein erster vorgegebener Anteil der jeweils ermittelten Nachbar-Basisstationen der jeweiligen Soll-Nachbarn-Vorgabe entspricht bzw. wenn die jeweils ermittelten Abstände von der jeweiligen Soll-Abstand-Vorgabe um mehr als ein erstes vorgegebenes Maß abweichen. Dagegen werden Warnungen jeweils signalisiert, wenn weniger als ein zweiter vorgegebener Anteil der jeweils ermittelten Nachbar-Basisstationen der jeweiligen Soll-Nachbarn-Vorgabe entspricht bzw. wenn die jeweils ermittelten Abstände von der jeweiligen Soll-Abstand-Vorgabe um mehr als ein zweites vorgegebenes Maß abweichen. Dabei ist der erste vorgegebene Anteil geringer als der zweite vorgegebene Anteil, bzw. das erste vorgegebene Maß ist höher als das zweite vorgegebene Maß.

Grundsätzlich können sowohl Fehler als auch Warnungen durch die Basisstationen selbst bzw. durch eine mit den Basisstationen verbundene Steuerungseinrichtung, beispielsweise das Gateway 100, signalisiert werden. Darüber hinaus können beliebige weitere Warnschwellen für jeweils weitere vorgegebene Anteile der jeweils ermittelten, den Soll-Nachbarn-Vorgaben entsprechenden Nachbar-Basisstationen bzw. für jeweils weitere Abweichungen von den Soll-Abstand-Vorgaben definiert werden. Bei Erreichen derartiger weiterer Warnschwellen wird insbesondere jeweils eine entsprechende Warnung signalisiert.

Vorzugsweise wird auf Fehler bzw. Warnungen jeweils ein Auftrag zur Korrektur einer Anordnung bzw. einer erfassten Position der jeweiligen Basisstation erzeugt. Ein solcher Auftrag kann insbesondere mittels einer Meldung an Betriebsführungs- bzw. Wartungspersonal für das Funkortungssystem übermittelt werden.

## Patentansprüche

1. Verfahren zur Überwachung eines Betriebs eines Funkortungssystems, bei dem
- eine Position eines Transponders (201-203) mittels mehrerer Basisstationen (101-105) des Funkortungssystems anhand von Funksignal-Empfangszeitdifferenzen und/oder anhand von Funksignal-Laufzeiten ermittelt wird, wobei die Basisstationen jeweils an einer vorgegebenen Position angeordnet sind,
- die Basisstationen jeweils benachbarte und/oder in einer vorgegebenen Umgebung befindliche Basisstationen als Nachbar-Basisstationen ermitteln,
- die Basisstationen jeweils Abstände zu den jeweiligen Nachbar-Basisstationen ermitteln,
- die jeweils ermittelten Nachbar-Basisstationen mit einer jeweiligen Soll-Nachbarn-Vorgabe verglichen werden,
- die jeweils ermittelten Abstände mit einer jeweiligen Soll-Abstand-Vorgabe verglichen werden,
- jeweils ein Fehler signalisiert wird, wenn weniger als ein vorgegebener Anteil der jeweils ermittelten Nachbar-Basisstationen der jeweiligen Soll-Nachbarn-Vorgabe entspricht und/oder wenn die jeweils ermittelten Abstände von der jeweiligen Soll-Abstand-Vorgabe um mehr als ein vorgegebenes Maß abweichen.

2. Verfahren nach Anspruch 1,
bei dem der Fehler jeweils signalisiert wird, wenn weniger als ein erster vorgegebener Anteil der jeweils ermittelten Nachbar-Basisstationen der jeweiligen Soll-Nachbarn-Vorgabe entspricht und/oder wenn die jeweils ermittelten Abstände von der jeweiligen Soll-Abstand-Vorgabe um mehr als ein erstes vorgegebenes Maß abweichen, und bei dem jeweils eine Warnung signalisiert wird, wenn weniger als ein zweiter vorgegebener Anteil der jeweils ermittelten Nachbar-Basisstationen der jeweiligen Soll-Nachbarn-Vorgabe entspricht und/oder wenn die jeweils ermittelten Abstände von der jeweiligen Soll-Abstand-Vorgabe um mehr als ein zweites vorgegebenes Maß abweichen.

3. Verfahren nach Anspruch 2,
bei dem die Fehler und/oder die Warnungen durch die Basisstationen und/oder eine mit den Basisstationen verbundene Steuerungseinrichtung signalisiert werden.

4. Verfahren nach einem der Ansprüche 2 oder 3,
bei dem weitere Warnschwellen für jeweils weitere vorgegebene Anteile der jeweils ermittelten, den Soll-Nachbarn-Vorgaben entsprechenden Nachbar-Basisstationen und/oder für jeweils weitere Abweichungen von den Soll-Abstand-Vorgaben definiert sind und bei dem bei Erreichen der weiteren Warnschwellen jeweils eine entsprechende Warnung signalisiert wird.

5. Verfahren nach einem der Ansprüche 2 bis 4,
bei dem auf den Fehler und/oder die Warnung ein Auftrag zur Korrektur einer Anordnung und/oder erfassten Position der jeweiligen Basisstation erzeugt wird.

6. Verfahren nach Anspruch 5,
bei dem der Auftrag mittels einer Meldung an Betriebsführungs- und/oder Wartungspersonal für das Funkortungssystem übermittelt wird.

7. Verfahren nach einem der Ansprüche 1 bis 6,
bei dem die Nachbar-Basisstationen und die Abstände zyklisch ermittelt werden.

8. Verfahren nach einem der Ansprüche 1 bis 7,
bei dem der jeweilige Anteil der den Soll-Nachbarn-Vorgaben entsprechenden Nachbar-Basisstationen als Mittelwert über eine vorgegebene Anzahl von Nachbar-Ermittlungen gebildet wird und bei dem der jeweilige Abstand als Mittelwert über eine vorgegebene Anzahl von Abstand-Ermittlungen gebildet wird.

9. Verfahren nach einem der Ansprüche 1 bis 8,
bei dem die Abstände zu den Nachbar-Basisstationen anhand von Funksignal-Laufzeiten zu und/oder von den Nachbar-Basisstationen ermittelt werden.

10. Verfahren nach einem der Ansprüche 1 bis 9,
bei dem die jeweils ermittelten Abstände mit der jeweiligen Soll-Abstand-Vorgabe absolut oder relativ verglichen werden.

11. Verfahren nach einem der Ansprüche 1 bis 10,
bei dem die Soll-Nachbarn-Vorgaben und die Soll-Abstand-Vorgaben aus einer Projektierung des Funkortungssystems und/oder der jeweiligen Basisstation abgeleitet werden und/oder bei dem die Soll-Nachbarn-Vorgaben und die Soll-Abstand-Vorgaben bei einer Inbetriebnahme des Funkortungssystems und/oder der jeweiligen Basisstation ermittelt und/oder festgelegt werden.

12. Verfahren nach einem der Ansprüche 1 bis 11,
bei dem bei einer Ermittlung der Nachbar-Basisstationen und der Abstände nur Basisstationen berücksichtigt werden, deren Position in einem Projektierungssystem als seit einer vorgegebenen Zeitdauer unverändert erfasst ist, und bei dem Fehler nur in Bezug auf berücksichtigte Basisstationen signalisiert werden.

13. Verfahren nach einem der Ansprüche 1 bis 12,
bei dem das Funkortungssystem ein zumindest UWB-, CHIRP-, PHASE- und/oder RFID-basiertes Real-time Locating System ist.

14. Funkortungssystem zur Durchführung eines Verfahrens nach einem der Ansprüche 1 bis 13, wobei das Funkortungssystem
- mehrere jeweils an einer vorgegebenen Position angeordnete Basisstationen (101-103) zur Ermittlung einer Position zumindest eines Transponders (104) umfasst,
- wobei die Basisstationen dafür eingerichtet sind, jeweils benachbarte und/oder in einer vorgegebenen Umgebung befindliche Basisstationen als Nachbar-Basisstationen zu ermitteln und jeweils Abstände zu den jeweiligen Nachbar-Basisstationen zu ermitteln,
- wobei das Funkortungssystem dafür eingerichtet ist, die jeweils ermittelten Nachbar-Basisstationen mit einer jeweiligen Soll-Nachbarn-Vorgabe zu vergleichen und die jeweils ermittelten Abstände mit einer jeweiligen Soll-Abstand-Vorgabe zu vergleichen,
- wobei das Funkortungssystem ferner dafür eingerichtet ist, jeweils einen Fehler zu signalisieren, wenn weniger als ein vorgegebener Anteil der jeweils ermittelten Nachbar-Basisstationen der jeweiligen Soll-Nachbarn-Vorgabe entspricht und/oder wenn die jeweils ermittelten Abstände von der jeweiligen Soll-Abstand-Vorgabe um mehr als ein vorgegebenes Maß abweichen.
